# EUROPEAN PATENT APPLICATION

(11) **EP 4 604 295 A1**
(43) Date of publication of application: **20.08.2025**
(21) Application number: 24845924.0
(22) Date of filing: 18.07.2024
(51) Int. Cl.: H01M 50/291, H01M 50/204

(54) **BATTERY PACK AND BATTERY PACK ASSEMBLY METHOD**

(30) Priority: 21.07.2023 KR 20230095119
(71) Applicant: LG Energy Solution, Ltd., Seoul 07335 (KR)
(72) Inventor: LIM, Chae Won, Daejeon 34122 (KR)
(74) Representative: Plasseraud IP
(86) International application number: PCT/KR2024/010362
(87) International publication number: WO 2025/023622

(57) **Abstract**

Example embodiments of the present technology provide a battery pack. The battery pack includes a lower frame including a base plate, a first side plate connected to a first side of the base plate, and a second side plate connected to a second side of the base plate, and first and second battery assemblies on the base plate, and each of the first and second battery assemblies includes a cell stack including a plurality of battery cells and a first cross beam coupled to a first side of the cell stack.

## Description

### [Technical Field]

The present invention relates to a battery pack and a method of assembling the battery pack, and more particularly, to a battery pack configured to be easily assembled to improve process convenience and a method of assembling the battery pack. The present application claims the benefit of priority based on Korean Patent Application No. 10-2023-0095119, filed on July 21, 2023, and the entire contents of the Korean patent application is incorporated herein by reference.

### [Background Art]

Secondary batteries can be charged and discharged a plurality of times and are used as an energy source for various types of electronic devices. With the advancement of technology, secondary batteries are used in the form of battery module or battery pack in mobility such as electric vehicles (EVs) or hybrid electric vehicles (HEVs) as well as portable devices.

A battery pack may be manufactured by assembling a plurality of battery assemblies and various components surrounding the plurality of battery assemblies. In this case, quality stability and a manufacturing speed may be greatly influenced by whether the components are disposed at appropriate positions. For example, when the assemblability of the battery pack is low, work errors are more likely to occur in a process, thus resulting in quality degradation. Accordingly, various studies are being conducted to improve the assemblability of a battery pack.

### [Disclosure]

### [Technical Problem]

A first aspect of the present invention is directed to providing a battery pack with improved assemblability. A second aspect of the present invention is directed to providing a method of assembling a battery pack with improved assemblability.

### [Technical Solution]

Example embodiments of the first aspect of the present invention provide a battery pack. The battery pack includes a lower frame including a base plate, a first side plate connected to a first side of the base plate, and a second side plate connected to a second side of the base plate; and first and second battery assemblies on the base plate, in which each of the first and second battery assemblies includes a cell stack including a plurality of battery cells and a first cross beam coupled to a first side of the cell stack, the first cross beam has a first stepped structure including a first coupling surface, a second coupling surface, and a third coupling surface that are sequentially connected to one another, and the first cross beam includes a first groove recessed into the second coupling surface.

In an example embodiment, the second coupling surface may be parallel to an upper surface of the base plate, the first coupling surface may be perpendicular to the second coupling surface, and the third coupling surface may be perpendicular to the second coupling surface.

In an example embodiment, the first side plate may have a protruding structure inserted into the first groove, and the protruding structure may extend in a first direction parallel to an upper surface of the base plate.

In an example embodiment, each of the first and second battery assemblies may further include a second cross beam coupled to the second side of the cell stack, the second side is opposite to the first side, the second cross beam may have a second stepped structure including a fourth coupling surface, a fifth coupling surface, and a sixth coupling surface that are sequentially connected to one another, the fifth coupling surface may include a second groove recessed inward and a handle partially embedded in the second groove, and the handle may be configured to be rotatable.

In an example embodiment, a rotation shaft of the handle is partially embedded in the second groove, and the rotation shaft is parallel to the first direction parallel to the upper surface of the base plate.

In an example embodiment, the rotation shaft of the handle may be parallel to the fourth coupling surface.

In an example embodiment, the fifth coupling surface may be parallel to the upper surface of the base plate, the fourth coupling surface may be perpendicular to the fifth coupling surface, and the sixth coupling surface may be perpendicular to the fifth coupling surface.

In an example embodiment, the fifth coupling surface of the second cross beam of the first battery assembly may be in contact with the second coupling surface of the first cross beam of the second battery assembly.

In an example embodiment, the fourth coupling surface of the second cross beam of the first battery assembly may be in contact with the first coupling surface of the first cross beam of the second battery assembly, and the sixth coupling surface of the second cross beam of the first battery assembly may be in contact with the third coupling surface of the first cross beam of the second battery assembly.

In an example embodiment, a height of the handle of the second cross beam may be equal to or less than a depth of the first groove of the first cross beam.

In an example embodiment, the handle may be hinged to the second groove, and a depth of the second groove may be equal to or greater than a thickness of the handle.

In an example embodiment, the battery pack includes a lower frame with a base plate, and first and second battery assemblies on the base plate, in which each of the first and second battery assemblies includes a cell stack including a plurality of battery cells, a first cross beam coupled to a first side of the cell stack, and a second cross beam coupled to a second side of the cell stack, the second side is opposite to the first side, the first cross beam includes a plurality of first grooves recessed inward, the second cross beam includes a plurality of second grooves recessed inward and a plurality of handles, and each of the plurality of handles is partially embedded in a corresponding one among the plurality of second grooves.

In an example embodiment, each of the plurality of handles of the second cross beam may be coupled to a corresponding one among the plurality of first grooves of the first cross beam, the handle may be configured to be rotated by a rotation shaft, and the rotation shaft is parallel to the first direction parallel to an upper surface of the base.

Example embodiments of the second aspect of the present invention provide a method of assembling a battery pack. The method includes providing first and second battery assemblies each including a cell stack and first and second cross beams coupled to the cell stack, disposing the first battery assembly on a base plate of a lower frame, and disposing the second battery assembly on the base plate to combine a handle of the second cross beam of the first battery assembly with a first groove of the first cross beam of the second battery assembly. In this case, the lower frame includes a base plate, a first side plate connected to a first side of the base plate, and a second side plate connected to a second side of the base plate, the first cross beam includes a first groove, and the second cross beam includes a second groove and a handle hinged to the second groove.

In an example embodiment, the first battery assembly may be disposed on the base plate by using the first groove of the first cross beam and the handle of the second cross beam.

In an example embodiment, the first side plate may have a protruding structure to be coupled to the first groove, and the first groove of the first cross beam and the protruding structure of the first side plate are coupled to each other when the first battery assembly is disposed on the base plate of the lower frame.

### [Advantageous Effects]

A battery pack according to example embodiments of the present invention includes a first cross beam and a second cross beam that are coupled to a cell stack. The first cross beam includes a first groove, and the second cross beam includes a handle to be coupled to the first groove. Combinability and mobility of the first cross beam and the second cross beam can be improved through the first groove and the handle. Accordingly, the assemblability of a battery pack and a method of assembling a battery pack can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery pack according to example embodiments.
FIG. 2 is a cross-sectional view taken along line A-A' of FIG. 1.
FIG. 3 is a perspective view of a first cross beam according to example embodiments.
FIG. 4 is a perspective view of a second cross beam according to example embodiments.
FIG. 5 is a perspective view of a second cross beam in which a handle is accommodated according to example embodiments.
FIG. 6 is an enlarged partial cross-sectional view of a part B of FIG. 2.
FIG. 7 is a cross-sectional view of a battery pack according to example embodiments.
FIG. 8 is a cross-sectional view of a battery pack according to example embodiments.
FIG. 9 is a flowchart of a method of assembling a battery pack according to example embodiments.
FIG. 10 is a cross-sectional view of a first cross beam and a second cross beam according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### BATTERY PACK

### (First Embodiment)

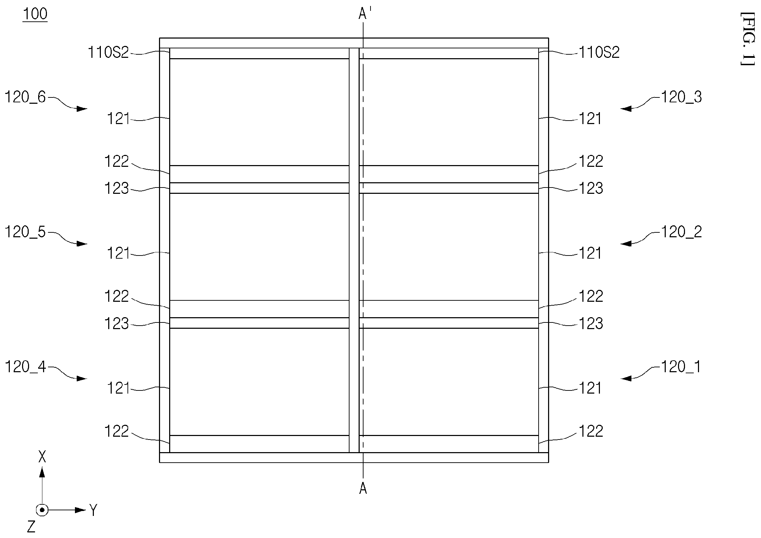

FIG. 1 is a perspective view of a battery pack 100 according to example embodiments.

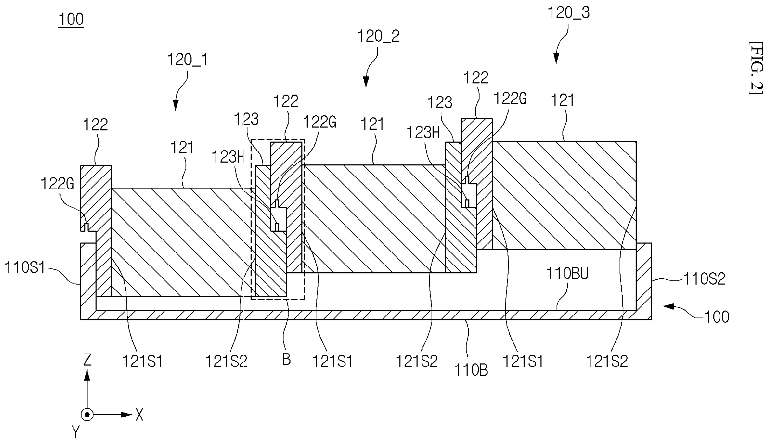

FIG. 2 is a cross-sectional view taken along line A-A' of FIG. 1.

Referring to FIGS. 1 and 2, the battery pack 100 may include a lower frame 110 and a plurality of battery assemblies 120_1, 120_2, 120_3, 120_4, 120_5, and 120_6. The lower frame 110 may support components included in the battery pack 100. The lower frame 110 may provide a space for mounting the plurality of battery assemblies 120_1, 120_2, 120_3, 120_4, 120_5, and 120_6. The lower frame 110 may include a base plate 110B, a first side plate 110S1 connected to a first side of the base plate 110B, and a second side plate 110S2 connected to a second side of the base plate 110B. For example, the lower frame 110 may be integrally formed.

Two directions substantially parallel to an upper surface 110BU of the base plate 110B are defined as an X-axis direction and a Y-axis direction, and a direction substantially perpendicular to the upper surface 110BU of the base plate 110B is defined as a Z-axis direction. The X-axis direction, the Y-axis direction, and the Z-axis direction may be substantially perpendicular to one another. The Y-axis direction may be referred to as a first direction. The X-axis direction may be referred to as a second direction. The Z-axis direction may be referred to as a third direction. Unless otherwise mentioned, the definition of the directions will apply to the following drawings.

The base plate 110B may support the plurality of battery assemblies 120_1, 120_2, 120_3, 120_4, 120_5, and 120_6. The plurality of battery assemblies 120_1, 120_2, 120_3, 120_4, 120_5, and 120_6 may be on the upper surface 110BU of the base plate 110B.

The base plate 110B may be configured to cool the plurality of battery assemblies 120_1, 120_2, 120_3, 120_4, 120_5, and 120_6. The base plate 110B may include a plurality of cooling channels. The plurality of cooling channels may extend in the Y-axis direction.

The side plates 110S1 and 110S2 may be connected to the base plate 110B. The side plates 110S1 and 110S2 may extend from the upper surface 110BU of the base plate 110B in the Z-axis direction. The side plates 110S1 and 110S2 may be substantially perpendicular to the Y-axis direction. The side plates 110S1 and 110S2 and the base plate 110B may provide a space in which the plurality of battery assemblies 120_1, 120_2, 120_3, 120_4, 120_5, and 120_6 are mounted. The side plate 110S1 may be referred to as a first side plate, and the side plate 110S2 may be referred to as a second side plate.

The first side plate 110S1 may be connected to a first side of the base plate 110B. The second side plate 110S2 may be connected to a second side of the base plate 110B. The first side plate 110S1 and the second side plate 110S2 may be parallel to each other. The first side plate 110S1 and the second side plate 110S2 may be spaced apart from each other in the Y-axis direction.

The battery pack 100 may be a final form of a battery system mounted in a mobility or the like. According to example embodiments, the battery pack 100 may be of a module type, and in this case, each of the plurality of battery assemblies 120_1, 120_2, 120_3, 120_4, 120_5, and 120_6 may include a module frame. According to example embodiments, the battery pack 100 may be of a moduleless type, and in this case, each of the plurality of battery assemblies 120_1, 120_2, 120_3, 120_4, 120_5, and 120_6 may not include a module frame.

In example embodiments, each of the plurality of battery assemblies 120_1, 120_2, 120_3, 120_4, 120_5, and 120_6 may include a cell stack 121 including a plurality of battery cells and a first cross beam 122. In example embodiments, each of the plurality of battery assemblies 120_1, 120_2, 120_3, 120_4, 120_5, and 120_6 may include the cell stack 121 including a plurality of battery cells, the first cross beam 122, and a third cross beam 123. Here, the plurality of battery cells are basic units of a lithium ion battery, i.e., a secondary battery. Each of the plurality of battery cells includes an electrode assembly, an electrolyte, and a case. Each of the plurality of battery cells may be classified into a lithium ion battery, a lithium ion polymer battery, a lithium polymer battery or the like according to the configurations of the electrode assembly and the electrolyte. Each of the plurality of battery cells may be a cylindrical battery cell, a prismatic battery cell, or a pouch type battery cell.

The plurality of battery assemblies 120_1, 120_2, 120_3, 120_4, 120_5, and 120_6 may be disposed in the X-axis direction and the Y-axis direction. In FIG. 1, the lower frame 110 may provide a space in which three battery assemblies are disposed in the X-axis direction and two battery assemblies are disposed in the Y-axis direction (i.e., a 3x2 array). In addition, the number of the plurality of battery assemblies 120_1, 120_2, 120_3, 120_4, 120_5, and 120_6 is not limited to six, and the plurality of battery assemblies 120_1, 120_2, 120_3, 120_4, 120_5, and 120_6 may be arranged in an M×N array (M and N are each an integer of 2 or more), as well as the 3x2 array.

The battery assembly 120_1 may be referred to as a first battery assembly, the battery assembly 120_2 may be referred to as a second battery assembly, the battery assembly 120_3 may be referred to as a third battery assembly, the battery assembly 120_4 may be referred to as a fourth battery assembly, the battery assembly 120_5 may be referred to as a fifth battery assembly, and the battery assembly 120_6 may be referred to as a sixth battery assembly.

In an example embodiment, the first to third battery assemblies 120_1, 120_2, and 120_3 may be arranged in the X-axis direction, and the fourth to sixth battery assemblies 120_4, 120_5, and 120_6 may be arranged in the X-axis direction. In an example embodiment, the first and fourth battery assemblies 120_1 and 120_4 may be spaced apart from each other in the Y-axis direction, the second and fifth battery assemblies 120_2 and 120_5 may be spaced apart from each other in the Y-axis direction, and the third and sixth battery assemblies 120_3 and 120_6 may be spaced apart from each other in the Y-axis direction.

In an example embodiment, each of the first battery assembly 120_1, the second battery assembly 120_2, the fourth battery assembly 120_4, and the fifth battery assembly 120_5 may include a cell stack 121 including a plurality of battery cells and a first cross beam 122 coupled to a first side 121S1 of the cell stack 121. In example embodiments, each of the first battery assembly 120_1 and the second battery assembly 120_2 may include the cell stack 121, the first cross beam 122 coupled to the first side 121S1 of the cell stack 121, and a second cross beam 123 coupled to a second side 121S2 of the cell stack 121.

The first cross beam 122 and the second cross beam 123 may be on the base plate 110B of the lower frame 110. The first and second cross beams 122 and 123 may extend in the Y-axis direction. The first and second cross beams 122 and 123 may be coupled to the base plate 110B.

In example embodiments, the first cross beam 122 may be on the first side 121S1 of the cell stack 121, and the second cross beam 123 may be on the second side 121S2 of the cell stack 121. Accordingly, the cell stack 121 may be transferred using the first cross beam 122 and the second cross beam 123 without directly gripping the cell stack 121. Accordingly, damage to the cell stack 121 in a process of assembling the battery pack 100 may be prevented, thus increasing yield and safety of the battery pack 100.

In an example embodiment, the first cross beam 122 of the first battery cell assembly 120_1 may be interposed between the first side plate 110S1 and the cell stack 121. In an example embodiment, the first cross beam 122 of the second battery cell assembly 120_2 may be interposed between the second cross beam 123 of the first battery cell assembly 120_1 and the cell stack 121 of the second battery cell assembly 120_2. The second cross beam 123 of the second battery cell assembly 120_2 may be interposed between the first cross beam 122 of the third battery cell assembly 120_3 and the cell stack 121 of the second battery cell assembly 120_2.

The first cross beam 122 of each of the battery assemblies 120_1, 120_2, 120_3, 120_4, 120_5, and 120_6 may be coupled to the second cross beams 123 of preceding battery cell assemblies. In an example embodiment, the second cross beam 123 of the first battery assembly 120_1 may be coupled to the first cross beam 122 of the second battery assembly 120_2 adjacent thereto. In an example embodiment, the second cross beam 123 of the second battery assembly 120_2 may be coupled to the first cross beam 122 of the third battery assembly 120_3 adjacent thereto. In an example embodiment, the second cross beam 123 of the fourth battery assembly 120_4 may be coupled to the first cross beam 122 of the fifth battery assembly 120_5 adjacent thereto. In an example embodiment, the second cross beam 123 of the fifth battery assembly 120_5 may be coupled to the first cross beam 122 of the sixth battery assembly 120_6 adjacent thereto. The first and second cross beams 122 and 123 may connect neighboring ones among the plurality of battery assemblies 120_1, 120_2, 120_3, 120_4, 120_5, and 120_6. Accordingly, the plurality of battery assemblies 120_1, 120_2, 120_3, 120_4, 120_5, and 120_6 may be sequentially arranged on the base plate 110B, thus improving the assemblability of the plurality of battery assemblies 120_1, 120_2, 120_3, 120_4, 120_5, and 120_6 with respect to the lower frame 110.

In an example embodiment, the third battery assembly 120_3 and the sixth battery assembly 120_6 may include a first cross beam 122 coupled to the first side 121S1 of the cell stack 121. The second side 121S2 of the cell stack 121 of each of the third and sixth battery assemblies 120_3 and 120_6 may be in contact with the second side plate 110S2. Accordingly, the first cross beam 122 of the third battery assembly 120_3 may be coupled to the second cross beam 123 of the second battery assembly 120_2. The first cross beam 122 of the sixth battery assembly 120_6 may be coupled to the second cross beam 123 of the fifth battery assembly 120_5. Therefore, stability and space utilization of the battery pack 100 may be improved.

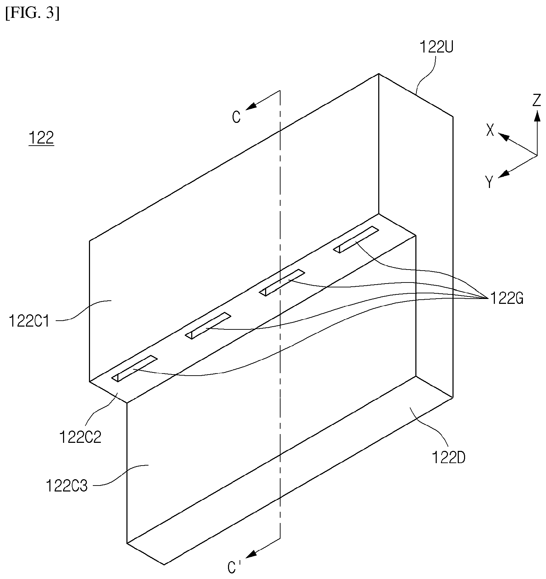

FIG. 3 is a perspective view of a first cross beam 122 according to example embodiments.

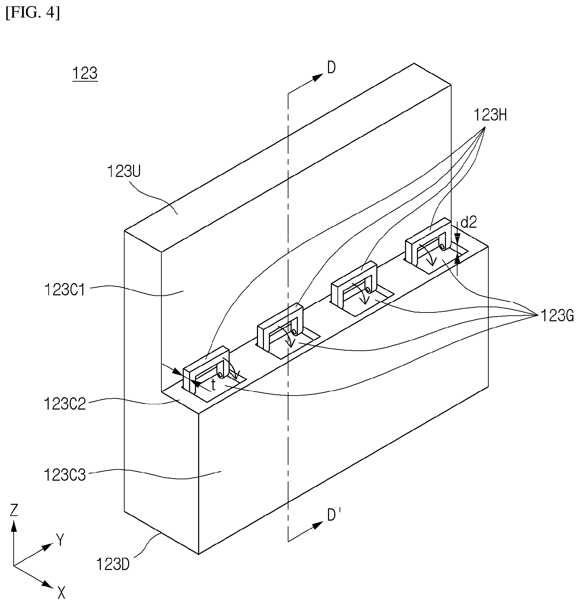

FIG. 4 is a perspective view of a second cross beam 123 according to example embodiments.

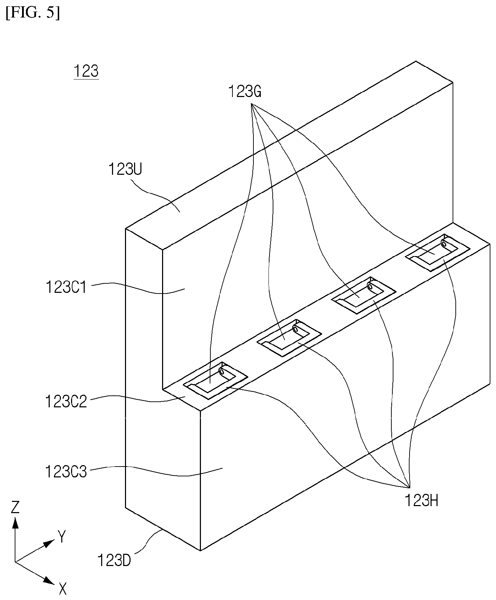

FIG. 5 is a perspective view of a second cross beam 123 in which a handle 123H is folded according to example embodiments.

Referring to FIGS. 2 to 5, the first cross beam 122 may include a first upper surface 122U and a first lower surface 122D. The first upper surface 122U and the first lower surface 122D may be substantially parallel to the upper surface 110BU of the base plate 110B. The first lower surface 122D may be in contact with the base plate 110B, and the first upper surface 122U may be opposite to the first lower surface 122D.

The first cross beam 122 may have a first stepped structure 122C including a first coupling surface 122C1, a second coupling surface 122C2, and a third coupling surface 122C3 that are sequentially connected to one another. For example, the first upper surface 122U may be connected to the first coupling surface 122C1, and the first coupling surface 122C1 may be connected to the second coupling surface 122C2. The second coupling surface 122C2 may be connected to the third coupling surface 122C3, and the third coupling surface 122C3 may be connected to the first lower surface 122D.

In an example embodiment, the first cross beam 122 may include at least one first groove 122G recessed into the second coupling surface 122C2. The handle 123H of the second cross beam 123 may be inserted into the first groove 122G of the first cross beam 122.

Referring to FIGS. 2 and 3, a length of the first lower surface 122D in the X-axis direction may be less than a length of the first upper surface 122U in the X-axis direction. A length of the first lower surface 122D in the Y-axis direction may be substantially the same as a length of the first upper surface 122U in the Y-axis direction. In an example embodiment, the second coupling surface 122C2 may be parallel to the upper surface 110BU of the base plate 110B, and the first coupling surface 122C1 and the third coupling surface 122C3 may be perpendicular to the upper surface 110BU of the base plate 110B.

In an example embodiment, the first coupling surface 122C1 may be substantially perpendicular to the second coupling surface 122C2. The first coupling surface may extend from the second coupling surface 122C2 in the Z-axis direction. In an example embodiment, the third coupling surface 122C3 may be substantially perpendicular to the second coupling surface 122C2. The third coupling surface 122C3 may extend from the second coupling surface 122C2 in a direction opposite to the Z-axis direction. In an example embodiment, the first groove 122G of the second coupling surface 122C2 may be formed to be away from the base plate 110B.

In an example embodiment, the first cross beam 122 may include a plurality of first grooves 122G. The plurality of first grooves 122G may be provided at regular intervals in the Y-axis direction. The plurality of first grooves 122G may be provided at regular intervals in a first direction parallel to the upper surface 110BU of the base plate 110B.

Referring to FIGS. 2 and 4, the second cross beam 123 may include a second upper surface 123U and a second lower surface 123D. The second upper surface 123U and the second lower surface 123D may be substantially parallel to the upper surface 110BU of the base plate 110B. The second lower surface 123D may be in contact with the base plate 110B, and the second upper surface 123U may be opposite to the second lower surface 123D. In an embodiment, a length of the second lower surface 123D in the X-axis direction may be greater than a length of the second upper surface 123U in the X-axis direction. A length of the second lower surface 123D in the Y-axis direction may be substantially the same as a length of the second upper surface 123U in the Y-axis direction.

The second cross beam 123 may have a second stepped structure 123C including a fourth coupling surface 123C1, a fifth coupling surface 123C2, and a sixth coupling surface 123C3 that are sequentially connected to one another. The second upper surface 123U may be connected to the fourth coupling surface 123C1, and the fourth coupling surface 123C1 may be connected to the fifth coupling surface 123C2. The fifth coupling surface 123C2 may be connected to the sixth coupling surface 123C3, and the sixth coupling surface 123C3 may be connected to the first lower surface 123D.

In an example embodiment, referring to FIGS. 2 and 4, the fifth coupling surface 123C2 may be parallel to the upper surface 110BU of the base plate 110B, and the fourth coupling surface 123C1 and the sixth coupling surface 123C3 may be perpendicular to the upper surface 110BU of the base plate 110B. In an example embodiment, the fourth coupling surface 123C1 may be perpendicular to the fifth coupling surface 123C2 and extend from the fifth coupling surface 123C2 to be away from the base plate 110B. In an example embodiment, the sixth coupling surface 123C3 may be perpendicular to the fifth coupling surface 123C2, and the sixth coupling surface 123C3 may extend from the fifth coupling surface 123C2 to be close to the base plate 110B.

In an example embodiment, the fifth coupling surface 123C2 may include at least one second groove 123G recessed inward and at least one handle 123H embedded in each of the at least one second groove 123G. The second groove 123G may be formed to be away from the fifth coupling surface 123C2.

In an example embodiment, the handle 123H may be configured to be rotatable. A rotation shaft of the handle 123H may be substantially parallel to the first direction, that is, the Y-axis direction. The rotation shaft of the handle 123H may be substantially parallel to the second direction, that is, the X-axis direction. The rotation shaft of the handle 123H may be embedded in the second groove 123G, and the handle 123H may be partially embedded in the second groove 123G. The handle 123H when fully folded may be parallel to the fifth coupling surface 123G and be seated in the second groove 123G.

In an example embodiment, the rotation shaft of the handle 123H may be substantially parallel to the fourth coupling surface 123C1. In an example embodiment, the rotation shaft of the handle 123H may be substantially parallel to a corner of the fourth coupling surface 123C1 in the Y-axis direction, i.e., the first direction. In an example embodiment, the rotation shaft of the handle 123H may be substantially parallel to the sixth coupling surface 123C3. In an example embodiment, the rotation shaft of the handle 123H may be substantially parallel to a corner of the sixth coupling surface 123C3 in the Y-axis direction, i.e., the first direction.

In an example embodiment, as shown in FIGS. 4 and 5, the rotation shaft of the handle 123H may be closer to the fourth coupling surface 123C1 than the sixth coupling surface 123C3. In this case, the handle 123H when unfolded may be substantially perpendicular to the fifth coupling surface 123C2. The unfolded handle 123H may be rotated clockwise to be accommodated in the second groove 123G.

In an example embodiment, the rotation shaft of the handle 123H may be closer to the sixth coupling surface 123C3 than the fourth coupling surface 123C1. In this case, the unfolded handle 123H may be substantially perpendicular to the fifth coupling surface 123C2. The unfolded handle 123H may be rotated counterclockwise to be accommodated in the second groove 123G.

The handle 123H when rotated may be parallel to or perpendicular to the first lower surface 123D. In an example embodiment, the handle 123H may be parallel to or perpendicular to the base plate 110B.

In an example embodiment, the handle 123H is hinged to the second groove 123G and a depth d2 of the second groove 123G may be equal to or greater than a thickness t of the handle 123H. Accordingly, when the handle 123H is folded to be parallel to the first lower surface 123D, the handle 123H may be accommodated in the second groove 123G and the storageability of the second cross beam 123 may be improved.

In an example embodiment, the second cross beam 123 may include a plurality of second grooves 123G and a plurality of handles 123H. In an example embodiment, the fifth coupling surface 123C2 may include a plurality of second grooves 123G and a plurality of handles 123H. The second grooves 123G and the handles 123H may be provided at regular intervals in the Y-axis direction. Each of the handles 123H of the second cross beam 123 may be coupled to a corresponding one among the first grooves 122G of the first cross beam 122. For example, each of the handles 123H may be coupled to a corresponding one of the first grooves 122G overlapping the handles 123H on a Z-axis.

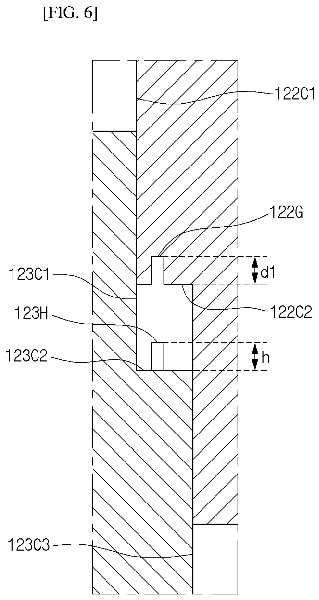

FIG. 6 is an enlarged partial cross-sectional view of a part B of FIG. 2.

Referring to FIGS. 2 and 6, the first cross beam 122 and the second cross beam 123 may overlap each other in the Z-axis direction. The handle 123H of the second cross beam 123 may be inserted into the first groove 122G of the first cross beam 122. In an example embodiment, a height h of the handle 123H may be substantially equal to or less than a depth d1 of the first groove 122G. The height h of the handle 123H may be understood to mean a length of the handle 123H from the fifth coupling surface 123C2 in the Z-axis direction. By inserting the handle 123H into the first groove 122G, the first cross beam 122 and the second cross beam 123 may be coupled to each other. As described above, the first cross beam 122 and the second cross beam 123 may be different from each other and have complementary shapes. Accordingly, the first cross beam 122 and the second cross beam 123 may be strongly coupled to each other without s component for fixing the first cross beam 122 and the second cross beam 123. Accordingly, the assemblability of the battery pack 100 may be improved.

The first to third coupling surfaces 122C1 to 122C3 of the first cross beam 122 may be coupled to the fourth to sixth coupling surfaces 123C1 to 123C3 of the second cross beam 123. For example, the first coupling surface 122C1 may be in contact with the fourth coupling surface 123C1, the second coupling surface 122C2 may be in contact with the fifth coupling surface 123C2, and the third coupling surface 122C3 may be in contact with the sixth coupling surface 123C3.

### (Second Embodiment)

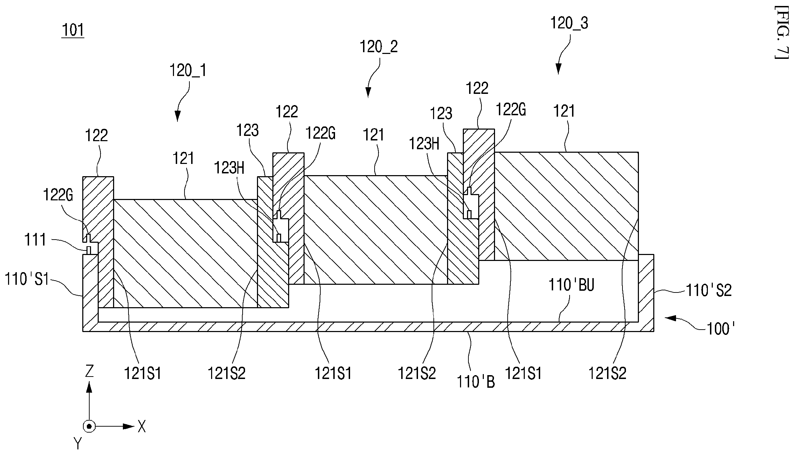

FIG. 7 is a cross-sectional view of a battery pack 101 according to example embodiments.

Referring to FIG. 7, the battery pack 101 may include a lower frame 110' and a plurality of battery assemblies 120_1, 120_2, 120_3, 120_4, 120_5, and 120_6. The lower frame 110' may include a base plate 110'B, a first side plate 110'S1 connected to a first side of the base plate 110'B, and a second side plate 110'S2 connected to a second side of the base plate 110'B. For example, the lower frame 110' may be integrally formed.

In an example embodiment, the first side plate 110'S1 of the lower frame 110' may include a protruding structure 111 that may be inserted into a first groove 122G. The protruding structure 111 may extend in a second direction parallel to an upper surface 110'BU of the base plate 110'B, that is, in the Y-axis direction. In an example embodiment, a length of the protruding structure 111 in the Z-axis direction may be substantially the same as a length of the first groove 122G in the Z-axis direction. In an example embodiment, a length of the protruding structure 111 in the X-axis direction may be substantially the same as a length of the first groove 122G in the X-axis direction. Accordingly, the protruding structure 111 of the first side plate 110'S1 may be inserted into the first groove 122G of the first battery assembly 120_1 on the base plate 110'B. Therefore, the first battery assembly 120_1 may be easily seated on the lower frame 110'. In addition, it is possible to check the protruding structure 111 during the assembling of the battery pack 101 to increase visibility, thereby improving the assemblability of the battery pack 101.

In an example embodiment, the protruding structure 111 may have substantially the same shape as a handle 123H. For example, a thickness of the protruding structure 111 may be substantially the same as a thickness of the handle 123H. In an example embodiment, a length of the protruding structure 111 in the Z-axis direction may be substantially the same as a length of the handle 123H in the Z-axis direction.

In an example embodiment, the first side plate 110'S1 of the lower frame 110' may be coupled to a first cross beam 122 of the first battery assembly 120_1 and a second cross beam 123 of the first battery assembly 120_1 may be coupled to a first cross beam 122 of the second battery assembly 120_2. A second cross-beam 123 of the second battery cell assembly 120_2 may be coupled to a first cross-beam 123 of the third battery cell assembly 120_3. That is, the lower frame 110', the first battery assembly 120_1, the second battery assembly 120_2, and the third battery assembly 120_3 may be sequentially engaged with one another. Accordingly, the battery assemblies 120_1, 120_2, 120_3, 120_4, 120_5, and 120_6 may be easily fixed to the lower frame 110', thereby improving the assemblability of the battery pack 101.

### (Third Embodiment)

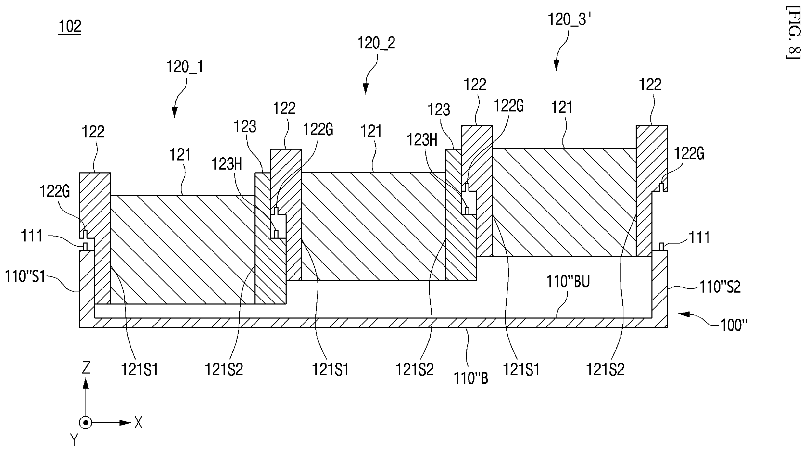

FIG. 8 is a cross-sectional view of a battery pack 102 according to example embodiments.

Referring to FIG. 8, the battery pack 102 may include a lower frame 110" and a plurality of battery assemblies 120_1, 120_2, 120_3', 120_4, 120_5, and 120_6'. In the lower plate 110", each of a first side plate 110"S1 and a second side plate 110"S2 may include a protruding structure 111.

In an example embodiment, the third battery assembly 120_3' may include a first cross beam 122 coupled to a first side 121S1 of a cell stack 121 and a second cross beam 123 coupled to a second side 121S2 of the cell stack 121. The second side plate 110"S2 of the lower frame 110" may include a protruding structure 111 that may be inserted into a first groove 122G. Accordingly, the third battery assembly 120_3' may be coupled to the second battery assembly 120_2 and the second side plate 110"S2, thereby improving combinability of the battery pack 100.

The sixth battery assembly 120_6' has substantially the same structure as the third battery assembly 120_3' and thus a redundant description thereof is omitted here.

The protruding structure 111 of the second side plate 110"S2 has substantially the same shape as the protruding structure 111 of the first side plate 110"S1 and thus a redundant description thereof is omitted here.

### Method of Assembling Battery Pack

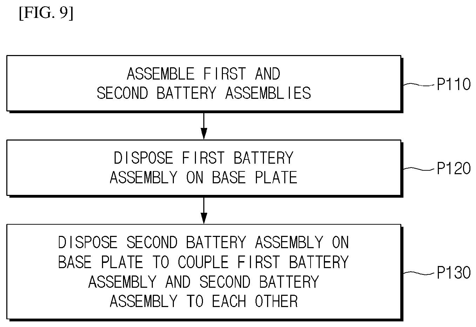

FIG. 9 is a flowchart of a method of assembling a battery pack according to example embodiments.

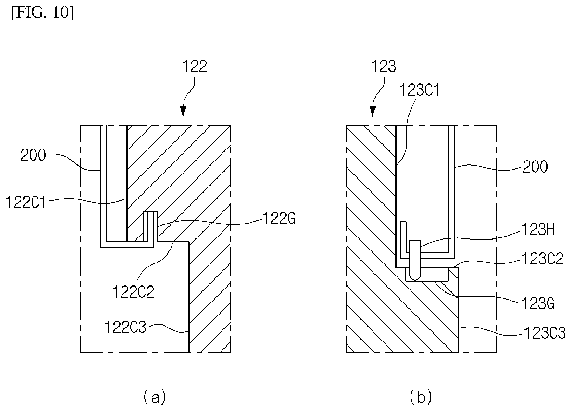

FIG. 10 is a cross-sectional view of a first cross beam 122 and a second cross beam 123 according to example embodiments. Specifically, FIG. 10A is a cross-sectional view of the first cross beam 122 into which an annular wire 200 is inserted, taken along line C-C' of FIG. 3. FIG. 10B is a cross-sectional view of the second cross beam 123 into which the annular wire 200 is inserted, taken along line D-D' of FIG. 4.

Referring to FIGS. 9 and 10, in the method of assembling a battery pack, in P110, first and second battery assemblies are provided, in which each of the first and second battery assemblies may include a cell stack and first and second cross beams coupled to the cell stack.

In an example embodiment, the method of assembling a battery pack may include assembling the first and second battery assemblies 120_1 and 120_2 (P110), disposing the first battery assembly 120_1 on the base plate 110B of the lower frame 110 (P120), and disposing the second battery assembly 120_2 on the base plate 110B to couple the handle 123H of the second cross beam 123 of the first battery assembly 120_1 to the first groove 122G of the first cross beam 122 of the second battery assembly 120_2 (P130). The lower frame 110 may include the base plate 110B, the first side plate 110S1 connected to the first side of the base plate 110B, and the second side plate 110S2 connected to the second side of the base plate 110B. The first cross beam 122 may have the first stepped structure 122C including the first coupling surface 122C1, the second coupling surface 122C2, and the third coupling surface 122C3 that are sequentially connected to one another. The first cross beam 122 may include the first groove 122G recessed into the second coupling surface 122C2.

In an example embodiment, the assembling of the first and second battery assemblies (P110) may include transferring the first cross beam 122 by using the first groove 122G, transferring the second cross beam 123 by using the handle 123H, and coupling the first cross beam 122 and the second cross beam 123 to the cell stack 121. For example, the first cross beam 122 may be transferred by hanging the annular wire 200 in the first groove 122G. In an example embodiment, referring to FIGS. 4, 5, and 10, the handle 123H of the second cross beam 123 may be rotated about a rotation shaft 123R. The handle 123H may be folded to be parallel to the fifth coupling surface 123C1 or be unfolded to be perpendicular to the fifth coupling surface 123C1. The second cross beam 123 may be transferred by hanging the annular wire 200 into the unfolded handle 123H. Accordingly, the mobility of the first cross beam 122 and the second cross beam 123 may be improved to increase the assemblability of the battery pack. The third battery assembly 120_3, the fourth battery assembly 120_4, the fifth battery assembly 120_5, and the sixth battery assembly 120_6 may be also assembled as described above.

The first side plate 110S1 may include the protruding structure 111 to be coupled to the first groove 122G. The first battery assembly 120_1 may be disposed on the base plate 110B such that the protruding structure 111 of the first side plate 110S1 is inserted into the first groove 122G of the first cross beam 122.

In an example embodiment, in the disposing of the first battery assembly 120_1 on the base plate 110B of the lower frame 110 (P120), the first battery assembly may be transferred using the first groove 122G of the first cross beam 122 and the handle 123H of the second cross beam 123. For example, the first battery assembly 120_1 may be disposed on the base plate 110B by hanging the annular wire 200 into each of the first groove 122G and the handle 123H of the first battery assembly 120_1. The second battery assembly 120_2, the fourth battery assembly 120_4, and the fifth battery assembly 120_5 may also be transferred as described above.

## Claims

1. A battery pack comprising:
a lower frame including a base plate, a first side plate connected to a first side of the base plate, and a second side plate connected to a second side of the base plate; and
first and second battery assemblies on the base plate,
wherein each of the first and second battery assemblies includes a cell stack including a plurality of battery cells and a first cross beam coupled to a first side of the cell stack,
the first cross beam has a first stepped structure including a first coupling surface, a second coupling surface, and a third coupling surface that are sequentially connected to one another, and
the first cross beam includes a first groove recessed into the second coupling surface.

2. The battery pack of claim 1, wherein
the second coupling surface is parallel to an upper surface of the base plate,
the first coupling surface is perpendicular to the second coupling surface, and
the third coupling surface is perpendicular to the second coupling surface.

3. The battery pack of claim 1, wherein the first side plate includes a protruding structure inserted into the first groove,
wherein the protruding structure extends in a first direction parallel to an upper surface of the base plate.

4. The battery pack of claim 1, wherein
each of the first and second battery assemblies further includes a second cross beam coupled to the second side of the cell stack,
the second side is opposite to the first side,
the second cross beam has a second stepped structure including a fourth coupling surface, a fifth coupling surface, and a sixth coupling surface that are sequentially connected to one another,
the fifth coupling surface includes a second groove recessed inward and a handle partially embedded in the second groove, and
the handle is configured to be rotatable.

5. The battery pack of claim 4, wherein
the fifth coupling surface is parallel to an upper surface of the base plate,
the fourth coupling surface is perpendicular to the fifth coupling surface, and
the sixth coupling surface is perpendicular to the fifth coupling surface.

6. The battery pack of claim 5, wherein a rotation shaft of the handle is parallel to the fourth coupling surface.

7. The battery pack of claim 4, wherein the fifth coupling surface of the second cross beam of the first battery assembly is in contact with the second coupling surface of the first cross beam of the second battery assembly.

8. The battery pack of claim 4, wherein
the fourth coupling surface of the second cross beam of the first battery assembly is in contact with the first coupling surface of the first cross beam of the second battery assembly, and
the sixth coupling surface of the second cross beam of the first battery assembly is in contact with the third coupling surface of the first cross beam of the second battery assembly.

9. The battery pack of claim 4, wherein a height of the handle of the second cross beam is equal to or less than a depth of the first groove of the first cross beam.

10. The battery pack of claim 4, wherein
the handle is hinged to the second groove, and
a depth of the second groove is equal to or greater than a thickness of the handle.

11. A battery pack comprising:
a lower frame with a base plate; and
first and second battery assemblies on the base plate,
wherein each of the first and second battery assemblies includes a cell stack including a plurality of battery cells, a first cross beam coupled to a first side of the cell stack, and a second cross beam coupled to a second side of the cell stack,
the second side is opposite to the first side,
the first cross beam includes a plurality of first grooves recessed inward,
the second cross beam includes a plurality of second grooves recessed inward and a plurality of handles, and
each of the plurality of handles is partially embedded in a corresponding one among the plurality of second grooves.

12. The battery pack of claim 11, wherein
each of the plurality of handles of the second cross beam is coupled to a corresponding one among the plurality of first grooves of the first cross beam,
the handle is configured to be rotated by a rotation shaft, and
the rotation shaft is parallel to a first direction parallel to an upper surface of the base plate.

13. A method of assembling a battery pack, the method comprising:
providing first and second battery assemblies each including a cell stack and first and second cross beams coupled to the cell stack;
disposing the first battery assembly on a base plate of a lower frame; and
disposing the second battery assembly on the base plate to combine a handle of the second cross beam of the first battery assembly with a first groove of the first cross beam of the second battery assembly,
wherein the lower frame includes a base plate, a first side plate connected to a first side of the base plate, and a second side plate connected to a second side of the base plate, and
the first cross beam includes a first groove, and the second cross beam includes a second groove and a handle hinged to the second groove.

14. The method of claim 13, wherein the first battery assembly is disposed on the base plate by using the first groove of the first cross beam and the handle of the second cross beam.

15. The method of claim 13, wherein the first battery pack assembly is disposed on the base plate to insert a protruding structure of the first side plate into the first groove of the first cross beam.
